# EUROPEAN PATENT SPECIFICATION

(11) **EP 2 836 694 B1**
(45) Date of publication and mention of the grant of the patent: **08.06.2016**
(21) Application number: 13718270.5
(22) Date of filing: 11.04.2013
(51) Int. Cl.: F02C 7/36, F16H 57/08

(54) **GEARBOX AND TURBINE ENGINE WITH GEARED FAN**
GETRIEBEKASTEN UND TURBINENMOTOR MIT GETRIEBELÜFTER
BOÎTE À ENGRENAGES ET MOTEUR DE TURBINE AYANT UN VENTILATEUR À ENGRENAGES

(30) Priority: 11.04.2012 US 201261622592 P; 29.06.2012 US 201261666532 P; 15.03.2013 US 201313835687
(43) Date of publication of application: 18.02.2015
(73) Proprietor: General Electric Company, Schenectady, NY 12345 (US)
(72) Inventor: VAN DER MERWE, Gert, Cincinnati, OH 45215 (US); HALLMAN, Darren, Niskayuna, NY 12309 (US); BUYUKISIK, Osman, West Chester, OH 45069 (US); BRADLEY, Donald, Cincinnati, OH 45215 (US); ANTELO, Randy, Cincinnati, OH 45215 (US)
(74) Representative: Williams, Andrew Richard
(86) International application number: PCT/US2013/036105
(87) International publication number: WO 2013/155260

(56) References cited:
- EP-A1- 2 267 338
- WO-A1-2005/031178
- DE-A1-102005 049 185
- DE-A1-102009 020 988
- DE-A1-102010 032 252
- JP-A- 2006 342 882
- US-A- 2 652 296
- US-A1- 2006 252 596

## Description

### BACKGROUND OF THE INVENTION

This invention relates generally to epicyclic gearboxes, and more specifically to carrier support apparatus and bearings of an epicyclic gearbox, according to the preamble of claim 1 and as it is disclosed in DE102009020988A.

Epicyclic gearboxes are often used in aircraft engines to transmit power, for example to drive a propeller or fan from a power turbine. Gearboxes for aircraft applications must be lightweight, capable of transmitting high torque loads, and highly reliable. The system level reliability of the gearbox is the biggest hurdle from a technical perspective.

In operation, the planets in the gearbox transfer large loads into the carrier, which cause deflections and misalignment in the bearings and gears of the gearbox. In order to have a commercially long life, these deflections and misalignments must be minimized.

It is known to support a gearbox carrier centrally using spherical bearings to transfer load at an axial midpoint in carrier. This isolates the torque fingers that couple the gearbox carrier to adjacent structures from bending moments. However, the working spherical joints with moving parts are subject to wearing and looseness, and their presence increases the complexity of the gearbox.

Furthermore, the use of traditional steel bearings (e.g. M50 steel alloy or similar) will yield a low system level life due to bearing count in the gearbox.

Ceramic rolling elements are known to provide a longer life than steel rollers, however they are used in the form of ball or spherical roller bearings which are not axially compliant and therefore not compatible with some helical gear configurations.

Accordingly, there is a need for a gearbox with a durable, axially-compliant bearing configuration.

### BRIEF SUMMARY OF THE INVENTION

This need is addressed by the present invention, which provides an epicyclic gearbox having planet gears are mounted for rotation by tandem cylindrical roller bearings made from a ceramic material

According to the invention, a gearbox includes the features of claim 1,

### BRIEF DESCRIPTION OF THE DRAWINGS

The invention may be best understood by reference to the following description taken in conjunction with the accompanying drawing figures in which:
FIG. 1 is a schematic cross-sectional view of a gas turbine engine constructed in accordance with an aspect of the present invention;
FIG. 2 is a schematic cross-sectional view of a first configuration of an epicyclic gearbox suitable for use with the engine of FIG. 1;
FIG. 3 is a schematic cross-sectional view of a second configuration of an epicyclic gearbox suitable for use with the engine of FIG. 1;
FIG. 4 is a schematic cross-sectional view of a third configuration of an epicyclic gearbox suitable for use with the engine of FIG. 1;
FIG. 5 is a cross-sectional view of an epicyclic gearbox constructed in accordance with an aspect of the present invention;
FIG. 6 is a side view of a bearing roller of the gearbox of FIG. 5;
FIG. 7 is a partially-sectioned view of a portion of a carrier of the gearbox of FIG. 5;
FIG. 8 is a view taken along lines 8-8 of FIG. 7; and
FIG. 9 is a partially-sectioned perspective view of a portion of the gearbox of FIG. 5.

### DETAILED DESCRIPTION OF THE INVENTION

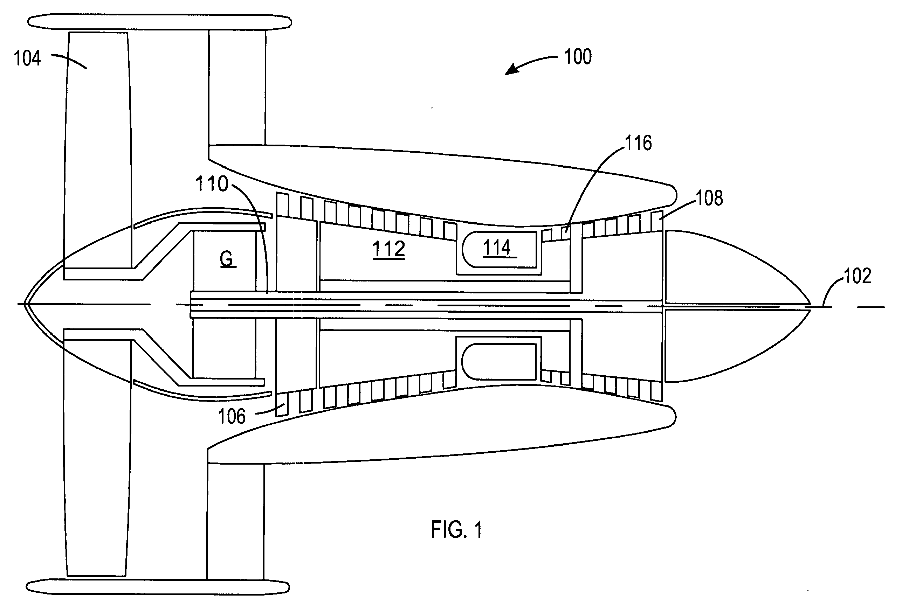

Referring to the drawings wherein identical reference numerals denote the same elements throughout the various views, FIG. 1 depicts an exemplary gas turbine engine 100 constructed according to an aspect of the present invention. The engine 100 has a longitudinal axis 102 and includes a fan 104, a low pressure compressor or "booster" 106 and a low pressure turbine ("LPT") 108 collectively referred to as a "low pressure system". The LPT 108 drives the booster 106 through an inner shaft 110, also referred to as an "LP shaft".

The inner shaft 110 is also coupled to a speed reducing gearbox, designated generally at "G", which is in turn connected to the fan 104. In the illustrated example, the fan 104 is located in front of the LPT 108 and the gearbox G is located behind the fan 104. However, The gearbox G could be located in front of behind the LPT 108, and the fan 104 can be in front or behind the LPT 108. The fan 104 can be surrounded by a duct (as illustrated), or it can be an open rotor type. In the illustrated example, the fan 104 has a design fan pressure ratio, defined as fan inlet pressure divided by fan exit pressure, of approximately 1.25 or higher. In accordance with conventional practice, the designated "fan pressure ratio" is the intended pressure ratio at a specified operating condition, e.g. at a cruise condition.

The engine 100 also includes a high pressure compressor ("HPC") 112, a combustor 114, and a high pressure turbine ("HPT") 116, collectively referred to as a "gas generator" or "core". The HPT 116 drives the HPC 110 through an outer shaft 116, also referred to as an "HP shaft". Together, the high and low pressure systems are operable in a known manner to generate a primary or core flow as well as a fan flow or bypass flow. While the illustrated engine 100 is a high-bypass turbo fan engine, the principles described herein are equally applicable to turboprop engines as well as other types of turbine engines requiring a speed reduction between the low-pressure system and a mechanical load.

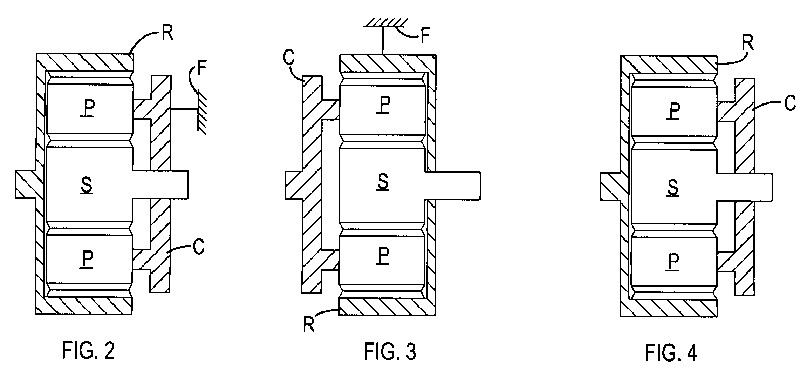

The gearbox G reduces the rotational speed from the LPT 108 to the fan 104. The gearbox G may be coupled to the fan 104 in three main configurations. The configurations are all in the epicyclic category, or family. These configurations are illustrated schematically with respect to a representative gearboxes G seen in FIGS. 2-4.

The first and simplest is a star configuration, seen in FIG. 2, where the input is through the sun gear "S" which is typically along the engine centerline. Radially outward and meshing with the sun gear S are a plurality of planet gears "P" which spin about their own axis, but do not orbit about the sun gear S. The planets gears P are supported by the carrier "C", which is connected to a stationary structure such as an engine frame, shown schematically at "F". The planet gears P drive a ring gear "R", which in turns will drive the fan 104 (FIG. 1). Exemplary speed reduction ratios for this configuration are approximately 3:1 - 4:1. The ring gear R spins in the opposite direction as the sun gear S.

The second configuration is a planetary design, seen in FIG. 3. Power is introduced via the sun gear S, which is typically along the engine centerline. Radially outward and meshing with the sun S are a plurality of planet gears P which spin about their own axis, and also orbit about the sun gear axis. The planet gears P are supported by the carrier C, which is connected to a shaft that drives the fan 104. So power is taken off the carrier C. The planet gears P mesh with a ring gear R, but the ring gear R is mounted statically and is typically connected to a stationary structure such as an engine frame F. Exemplary speed reduction ratios for this configuration are approximately 4:1 - 5:1. The carrier C rotates in the same direction as the sun gear.

The third configuration is a differential design, seen in FIG. 4 It is similar to the star and planetary configurations described above, but both the carrier C and the ring gear R rotate. The carrier C and ring gear R are supported by bearings (not shown) which mount to a frame or static structure. The ring gear R rotates opposite sun gear S, the carrier C rotates in the same direction as sun gear S. Exemplary speed reduction ratios forth this configuration are approximately 7:1 - 10:1. This configuration can be implemented with equal speed on the ring gear R and carrier C, or the speed ratio can be changed, with the extremes being a stationary ring gear R or carrier C, thus resulting in either the star or planetary configurations described above.

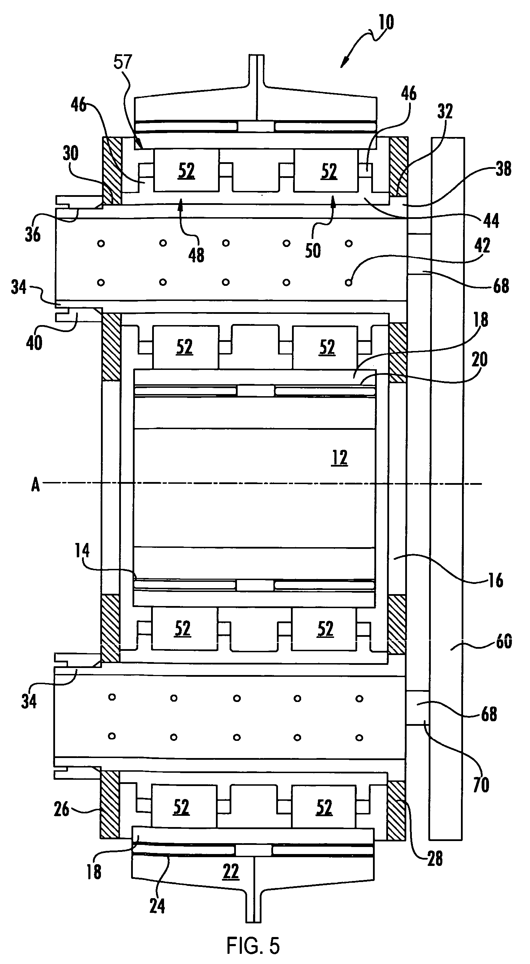

FIG. 5 illustrates a gearbox 10 constructed according to an aspect of the present invention. The gearbox 10 is an epicyclic type and is representative of an internal structural arrangement that may be used for any of the configurations of gearbox "G" described above. The gearbox 10 has a central axis "A" and includes a centrally-located sun gear 12. The sun gear 12 has a double-helical or "herringbone" pattern of gear teeth 14. A carrier 16 surrounds the sun gear 12 and carries an annular array of planet gears 18. In the illustrated example there are four planet gears 18 but varying numbers of planet gears 18 may be used. Each planet gear 18 has a herringbone pattern of gear teeth 20. A ring gear 22 surrounds the planet gears 18 and also has a herringbone pattern of gear teeth 24. Collectively the sun gear 12, the planet gears 18, and the ring gear 22 constitute a gear train. Each of the planet gears 18 meshes with both the sun gear 12 and the ring gear 22. The sun gear 12, planet gears 18, and ring gear 22 may be made from steel alloys. When turned by an input (for example, the LPT 108) as described above, the gearbox 10 is effective to reduce the rotational speed of the sun gear 12 to a rotational speed appropriate for the load coupled to the ring gear 20 (for example, the fan 104).

Because each of the gear meshes (sun-to-planet and planet-to-ring) has a double-helical or "herringbone" gear tooth profile, there is no relative movement possible parallel to the axis A between the sun gear 12 and the planet gears 18, or the planet gears 18 and the ring gear 22, or in other words there is no axial compliance between these elements.

The planet gears 18 are therefore selected and mounted in a manner to provide axial compliance between the carrier 16 and the planet gears 18.

The mounting of one planet gear 18 will be described with the understanding that all of the planet gears 18 are mounted identically. The carrier 16 includes a forward wall 26 and an aft wall 28, with coaxial bores 30 and 32, respectively. A pin 34 is received in the bores 30 and 32. The pin 34 is hollow, generally cylindrical, and has forward and aft ends. The forward end includes a threaded, reduced-diameter surface 36 while the aft end includes an annular, radially-outwardly-extending flange 38. A retainer 40 (in this example a threaded locknut) engages the reduced-diameter forward surface 36 to secure the pin 34 in position against rearward axial movement. The pin 34 has a plurality of feed holes 42 formed therein. In operation, oil is fed to the interior of the hollow pin 34 and flows through the feed holes to an inner race 44, providing both cooling and lubrication. Roller bearings 52 are disposed between the inner race 44 and the interior surface of the planet gear 18.

In the illustrated example, the inner race 44 is a single integral component incorporating pairs of raised guides 46 which define annular forward and aft raceways 48 and 50. The flange 38 of the pin 34 bears against the inner race 44 which in turn bears against the interior face of the front wall 26 of the carrier 16. This secures the pin 24 against forward axial movement. The use of a single inner race provides for good concentricity between roller sets, but two separate inner races could be used as well. The inner race 44 is sized so that it cannot move axially relative to the carrier 16.

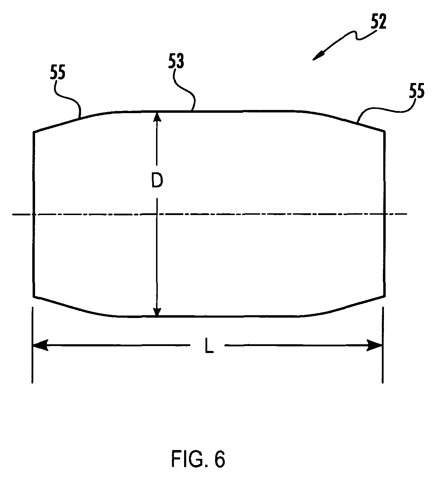

The channels 48 and 50 receive rollers 52, in two tandem rings. The rollers 52 comprise a ceramic material of a known composition, for example silicon nitride (Si₃Ni₄). Optionally, more than two raceways could be provided, with each raceway including a plurality of rollers 52. The rollers 52 are configured as cylindrical rollers. As seen in FIG. 6, in profile view the rollers 52 have a barrel-like shape with a central crown 53 of maximum diameter, with end portions 55 that taper off in a convex curve to a smaller diameter (the shaping is exaggerated for illustration in FIG. 6). Careful selection of the shape and dimensions of the crown 53 and end portions 55 in accordance with known practices will provide the longest life for the rollers 52.

Cylindrical rolling elements typically have a length of diameter ratio (L/D, see FIG. 6) of 1. This ratio is specific to high speed bearings (approximately one million DN, where D = diameter of bore in millimeters, N = revolutions per minute operating speed). A rolling element that spins at high speed will have a certain stability due to gyroscopic effect. This stability must counteract any tendency for the rolling element to yaw, which can be caused by asymmetric drag force on the rolling element. Asymmetric drag could be due to cage contact or rollers that contact the race with slight misalignment, for example during a flight maneuver load that puts misalignment into the power gearbox.

Increasing L/D ratio gives greater load carrying capability (as the length increases, the area to distribute the load increases). However, as the length of the rolling element becomes longer, the effect of these drag forces increase, up to a point where the rolling element is not stable any more. The stability point may be determined through a combination of analysis and testing.

Ceramic materials require additional design considerations compared to steel. First, the density is lower, so gyroscopic stability is lower for the same size, compared to traditional steel. Second, ceramic material has a better surface finish and lower coefficient of friction, which will lower drag forces. Third, ceramic materials have low fracture toughness. Therefore, for the same diameter rolling element, as the length increases, the possibility of introducing a bending moment into the rolling element increases. This moment with cause tensile stresses in the ceramic material, and if the stresses get large enough the ceramic material will fracture.

Analysis has shown that for the rollers 52, an L/D ratio of approximately 1.3 to approximately 1.8 provides a balance between load-carrying capability, stability, and longevity. In another exemplary embodiment, an L/D ratio of 1.5 is used.

Referring back to FIG. 5, the cylindrical interior surface of the planet gear 18 defines the outer race 57 for the rollers 52. In general, any rolling-element bearing consists of an inner race, rolling elements, a cage, and an outer race. The sum of the outer race thickness, rolling element diameter, and inner race thickness set the radial space or "real estate" required to fit the bearing into a given space (in this case the planet gear 18). In order to maximize load carrying capability, the pitch diameter of the rolling elements need to be maximized. This allows for bigger rollers, and also more rollers to be included in the bearing. Bigger rollers and more rollers in turn result in lower contact stresses, and thus longer life for the bearing. It is clear that removing the outer race as a separate component will have large benefits to the design, both in terms of final system life, as well as weight. Optionally, the raceways 48 and 50 described above could be incorporated into the interior surface of the planet gear 18, instead of the inner race 44.

In operation, axial sliding of the rollers 52 can occur relative to the outer race 57, which in turn permits limited axial movement of the carrier 16 relative to the planet gears 18. This allows for tolerance and thermal stackup in the carrier 16.

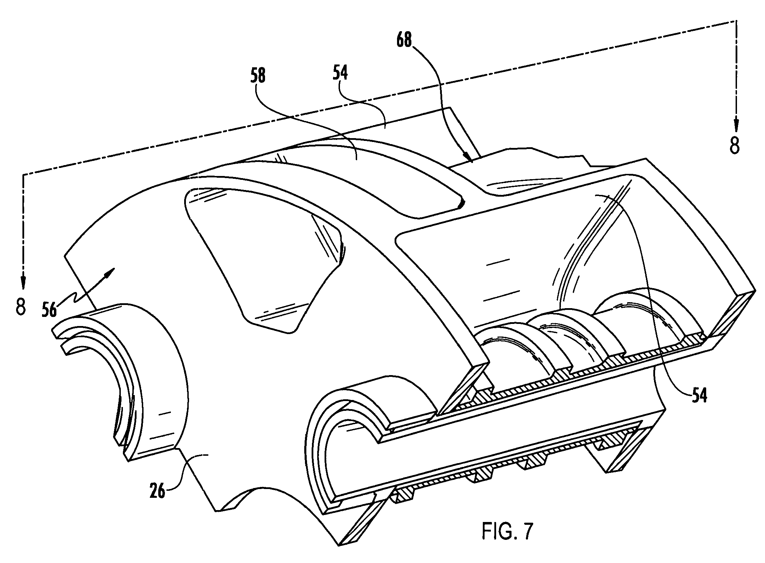

The carrier 16 is also supported in a manner to prevent misalignment in the gears and bearings of the gearbox 10 during operation, as illustrated in FIGS. 7-9.

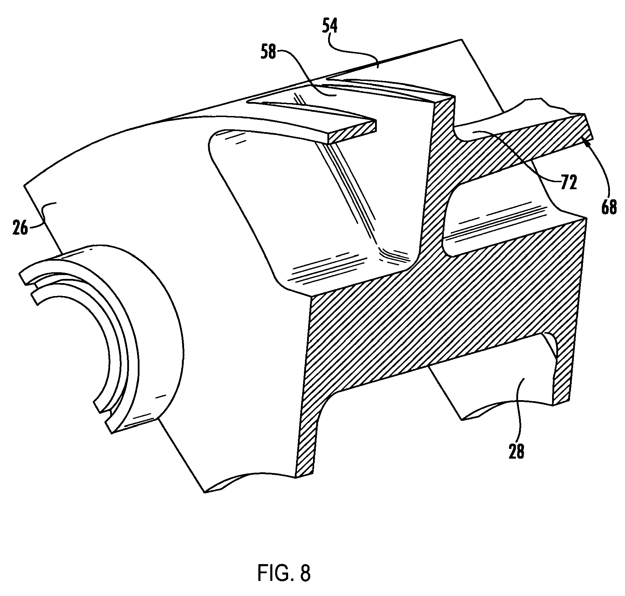

The forward and aft walls 26 and 28 of the carrier 16 are interconnected by axially-extending sidewalls 54 (see FIG. 7). Pairs of the sidewalls 54 are disposed on opposite lateral sides of each of the planet gears 18. Collectively, the forward wall 26, aft wall 28, and the sidewalls 54 define a plurality of lobes or arms 56 of the carrier 16, with spaces therebetween. Each planet gear 18 is enclosed within one lobe 56. The carrier 16 also includes a center plate structure as an integral part of its structure. As seen in FIGS. 7 and 8, the center plate structure is segmented into a plurality of individual center plates 58. Each center plate 58 takes the form of an arc-shaped portion of a circular disk, and lies substantially in a radial plane (i.e. is parallel to the forward and aft walls 26 and 28). Each center plate 58 spans the space between a pair of the lobes 56, connecting to adjacent ones of the sidewalls 54. In the illustrated example, the center plates 58 are located approximately halfway between the forward and aft walls 26 and 28. The axial location of the center plates 58 may be adjusted to suit a particular application. In particular, through careful placement of the axial location of the center plates 58, misalignment in the carrier 16 can be controlled.

An annular support ring 60 (see FIG. 5) is disposed axially adjacent to the aft wall 28. The support ring 60 is provided with means such as bolt holes (not shown) to secure it to a torque ring structure (not shown). A plurality of torque fingers 68 extend axially between the support ring 60 and the center plate structure. One torque finger 68 is provided for each of the center plates 58. The torque finger 68 is functionally integral with the center plate 58 and the support ring 60. It may be constructed as part of an integral (i.e. monolithic) component with the center plate 58 and the support ring 60, or it may be a separate component which is assembled to center plate 58 and the support ring 60. The center plate structure as well as the surrounding structures may be constructed from a suitable metallic alloy such as an iron-, nickel-, or titanium-based alloy. The torque finger 68 has a first cross-sectional area at its aft end 70 (FIG. 5) and tapers to a smaller cross-sectional area at its forward end 72 (FIG. 8). Its cross-sectional width in the tangential direction is generally greater than its cross-sectional thickness in a radial direction. The forward and aft ends 72 and 70 taper smoothly into the center plate 58 and the support ring 60 through concave-curved fillets.

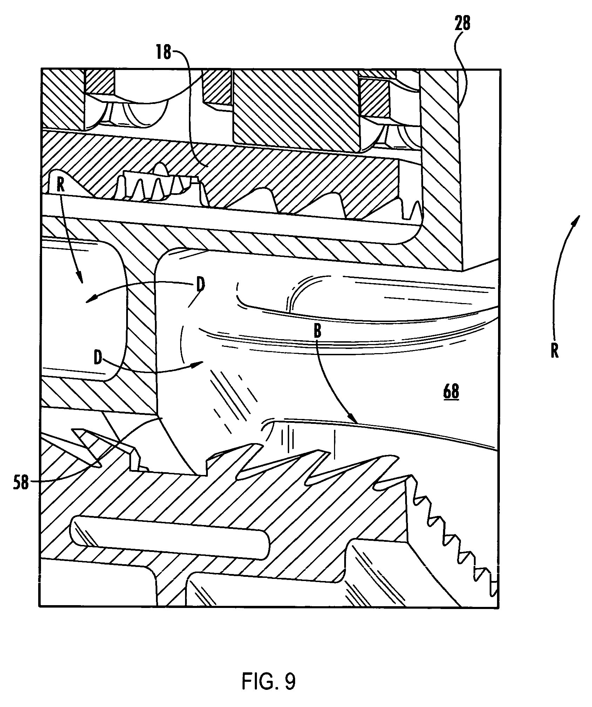

In operation, the planet gears 18 transfer large tangential forces into the carrier 16, causing the carrier 16 to tend to rotate relative to the support ring 60 (see the relative direction marked by the arrows "R" in FIG. 9). This results in elastic bending of the torque fingers 68 in the tangential direction (shown by arrow "B"). The center plates 58 will deflect (arrows "D") to accommodate the bending of the of the torque fingers 68. Their effect is to absorb the torque as strain energy and isolate the movement of the torque fingers 68 from the carrier 16. This avoids distortion of the carrier 16 and consequent misalignment of the bearings and changing of gear operating clearances. The center plates 58 are sized and shaped such that the stresses in them will remain in the elastic range for the expected operating loads.

The gearbox described herein has several advantages over the prior art. It eliminates several separate parts as compared to a prior art gearbox. No lubrication of joints is required. The low misalignment provided by this apparatus is enabling technology for use of a gearbox embedded in a gas turbine engine. In particular, low misalignment will result in gear and bearing life that meets system level requirements.

Furthermore, the use of ceramic cylindrical rolling elements allows the planet gears 18 to have a degree of freedom in the axial direction, simplifying the design. The ceramic rolling elements are anticipated to provide at least a doubling in life compared to steel rollers, allowing the gearbox 10 to meet reliability targets. The ceramic rolling elements also bring excellent oil-off performance, low oil flow requirements, low heat generation, and light weight design as additional benefits. Commercially the design will have a long life, which will minimize the cost of replacement over the life of the product.

## Claims

1. A gearbox (10), comprising:
a carrier (16) having a central axis and including spaced-apart forward and aft walls (26, 28) with respective forward and aft coaxial bores (30, 32);
a pin (34) with forward and aft ends received in the forward and aft bores (30,32), respectively, the pin (34) secured against axial movement relative to the carrier (16);
an inner race (44) mounted on the pin (34) between the forward and aft ends, the inner race (44) secured against axial movement relative to the carrier (16);
a planet gear (18) mounted for rotation about the pin (34) such than a cylindrical interior surface of the planet gear defines an outer race (57), wherein either the inner race (44) or the interior surface of the planet gear defines at least two axially-spaced apart annular raceways (48, 50);
a plurality of generally cylindrical rollers (52) made of a ceramic material disposed in each of the raceways (48, 50), between the inner and outer races;
a sun gear (12) mounted for rotation about the central axis and engaged with the planet gear (18); and
a ring gear (22) engaged with the planet gear (18) **characterised by** a flexible center plate structure (58) disposed between the forward and aft walls (26, 28).

2. The gearbox (10) of claim 1, wherein each of the rollers (52) has a ratio of length to diameter of approximately 1.3 to approximately 1.8.

3. The gearbox (10) of claim 1, wherein each of the rollers (52) has a ratio of length to diameter of approximately 1.5.

4. The gearbox (10) of any of claims 1 to 3, wherein:
the aft end of the pin (34) includes an annular, radially-outwardly-extending flange (38) that bears against the inner race (44), so as to prevent forward axial motion of the pin (34) relative to the carrier (16); and
the forward end of the pin (34) is connected to a retainer (40) that bears against the forward wall (26) of the carrier (16), so as to prevent rearward axial motion of the pin (34) relative to the carrier (16).

5. The gearbox (10) of any preceding claim, wherein the ceramic material is silicon nitride.

6. The gearbox (10) of any preceding claim, wherein the rollers (52) have a barrel-like shape with a central crown (53) of maximum diameter and end portions (55) tapering off from the central crown (53) to a smaller diameter.

7. The gearbox (10) of any preceding claim, wherein the center plate structure (58) is disposed approximately halfway between the forward and aft walls (26, 28) in an axial direction.

8. The gearbox (10) of any preceding claim, wherein the carrier (16) comprises at least one sidewall (54) interconnecting the forward and aft walls (26, 28).

9. The gearbox (10) of claim 8, wherein a plurality of sidewalls (54) are arranged in an array of spaced-apart pairs about the central axis, so as to define a plurality of lobes of the carrier (16).

10. The gearbox (10) of claim 9, wherein a plurality of spaces are defined between the lobes of the carrier (16), and the center plate structure comprises a plurality of center plates (58), each individual center plate disposed in one of the spaces and extending between adjacent ones of the sidewalls (54).

11. A gas turbine engine (100), comprising:
a turbomachinery core (112, 114, 116) operable to produce a flow of combustion gases;
a low-pressure turbine (108) disposed in downstream fluid flow communication with the turbomachinery core (112, 114, 116);
- a rotatable turbomachinery fan (104); and
an epicyclic gearbox (10) coupled between the fan (104) and the low-pressure turbine (108), the epicyclic gearbox (10) as recited in any of claims 1 to 10.

12. The gas turbine engine (100) of claim 11, wherein the fan (104) has a pressure ratio of approximately 1.25 or higher.

## Patentansprüche

1. Getriebe (10), umfassend:
einen Träger (16), der eine Mittelachse aufweist und beabstandete vordere und hintere Wände (26, 28) bezüglich vorderen und hinteren koaxialen Bohrungen (30, 32) enthält;
einen Stift (34) mit vorderem und hinterem Ende, die jeweils in der vorderen und hinteren Bohrung (30, 32) aufgenommen sind, wobei der Stift (34) gegen axiale Bewegung bezüglich des Trägers (16) gesichert ist;
einen inneren Laufring (44), der am Stift (34) zwischen dem vorderen und hinteren Ende angebracht ist, wobei der innere Laufring (44) gegen axiale Bewegung bezüglich des Trägers (16) gesichert ist;
ein Planetenrad (18), das derart zur Drehung am Stift (34) angebracht ist, dass eine zylindrische Innenfläche des Planetenrads einen äußeren Laufring (57) definiert, wobei entweder der innere Laufring (44) oder die Innenfläche des Planetenrads zumindest zwei axial beabstandete, ringförmige Laufflächen (48, 50) definiert;
mehrere, im Allgemeinen zylindrische Rollen (52) aus einem Keramikmaterial, die in jeder der Laufflächen (48, 50) zwischen dem inneren und äußeren Laufring angeordnet sind;
ein Sonnenrad (12), das zur Drehung um die Mittelachse angebracht ist und mit dem Planetenrad (18) in Eingriff steht; und
ein Tellerrad (22), das mit dem Planetenrad (18) in Eingriff steht, **gekennzeichnet durch** eine flexible Mittelplattenstruktur (58), die zwischen der vorderen und hinteren Wand (26, 28) angeordnet ist.

2. Getriebe (10) nach Anspruch 1, wobei jede der Rollen (52) ein Länge/Durchmesser-Verhältnis von ungefähr 1,3 bis ungefähr 1,8 aufweist.

3. Getriebe (10) nach Anspruch 1, wobei jede der Rollen (52) ein Länge/Durchmesser-Verhältnis von ungefähr 1,5 aufweist.

4. Getriebe (10) nach einem der Ansprüche 1 bis 3, wobei:
das hintere Ende des Stifts (34) einen ringförmigen, radial nach außen verlaufenden Flansch (38) enthält, der gegen den inneren Laufring (44) drückt, um axiale Vorwärtsbewegung des Stifts (34) bezüglich des Trägers (16) zu verhindern; und
das vordere Ende des Stifts (34) mit einem Halter (40) verbunden ist, der gegen die vordere Wand (26) des Trägers (16) drückt, um axiale Rückwärtsbewegung des Stifts (34) bezüglich des Trägers (16) zu verhindern.

5. Getriebe (10) nach einem der vorhergehenden Ansprüche, wobei das Keramikmaterial Siliziumnitrid ist.

6. Getriebe (10) nach einem der vorhergehenden Ansprüche, wobei die Rollen (52) eine fassartige Form mit einer zentralen Krone (53) mit maximalem Durchmesser und Endabschnitten (55) aufweisen, die sich von der zentralen Krone (53) zu einem kleineren Durchmesser verjüngen.

7. Getriebe (10) nach einem der vorhergehenden Ansprüche, wobei die Mittelplattenstruktur (58) ungefähr auf halbem Wege zwischen der vorderen und hinteren Wand (26, 28) in einer axialen Richtung angeordnet ist.

8. Getriebe (10) nach einem der vorhergehenden Ansprüche, wobei der Träger (16) zumindest eine Seitenwand (54) aufweist, die die vordere und hintere Wand (26, 28) miteinander verbindet.

9. Getriebe (10) nach Anspruch 8, wobei mehrere Seitenwände (54) in einer Gruppierung von beabstandeten Paaren um die Mittelachse angeordnet sind, um mehrere Nocken des Trägers (16) zu definieren.

10. Getriebe (10) nach Anspruch 9, wobei mehrere Räume zwischen den Nocken des Trägers (16) definiert sind und die Mittelplattenstruktur mehrere Mittelplatten (58) umfasst, wobei jede individuelle Mittelplatte in einem der Räume angeordnet ist und zwischen benachbarten der Seitenwände (54) verläuft.

11. Gasturbinenmotor (100), umfassend:
einen Turbomaschinenkern (112, 114, 116), der zum Erzeugen eines Stroms von Verbrennungsgasen betriebsfähig ist;
eine Niederdruckturbine (108), die in stromabwärtiger Fluidstromverbindung mit dem Turbomaschinenkern (112, 114, 116) angeordnet ist;
ein drehbares Turbomaschinengebläse (104); und
ein Umlaufgetriebe (10), das zwischen dem Gebläse (104) und der Niederdruckturbine (108) angekuppelt ist, das Umlaufgetriebe (10) gemäß einem der Ansprüche 1 bis 10.

12. Gasturbinenmotor (100) nach Anspruch 11, wobei das Gebläse (104) ein Druckverhältnis von ungefähr 1,25 oder darüber aufweist.

## Revendications

1. Train d'engrenages (10), comprenant :
un support (16) ayant un axe central et comprenant des parois avant et arrière (26, 28) espacées l'une de l'autre avec des alésages coaxiaux avant et arrière respectifs (30, 32) ;
une broche (34) avec des extrémités avant et arrière reçues dans les alésages avant et arrière (30, 32), respectivement, la broche (34) étant fixée contre tout mouvement axial par rapport au support (16) ;
une bague intérieure (44) montée sur la broche (34) entre les extrémités avant et arrière, la bague intérieure (44) étant fixée contre tout mouvement axial par rapport au support (16) ;
un engrenage planétaire (18) monté à rotation autour de la broche (34) de sorte qu'une surface cylindrique interne de l'engrenage planétaire définisse une bague extérieure (57), dans lequel la bague intérieure (44) ou la surface interne de l'engrenage planétaire définit au moins deux voies de roulement annulaires (48, 50) espacées l'un de l'autre ;
une pluralité de galets généralement cylindriques (52) constitués d'un matériau céramique disposés dans chacune des voies de roulement (48, 50) entre les bagues intérieure et extérieure ;
une roue solaire (12) montée à rotation autour de l'axe central et en prise avec l'engrenage planétaire (18) ; et
une couronne dentée (22) en prise avec l'engrenage planétaire (18), **caractérisé par** une structure de plaque centrale souple (58) disposée entre les parois avant et arrière (26,28).

2. Train d'engrenage (10) selon la revendication 1, dans lequel chacun des galets (52) a un rapport de la longueur au diamètre d'environ 1,3 à environ 1,8.

3. Train d'engrenage (10) selon la revendication 1, dans lequel chacun des galets (52) a un rapport de la longueur au diamètre d'environ 1,5.

4. Train d'engrenage (10) selon l'une quelconque des revendications 1 à 3, dans lequel :
l'extrémité arrière de la broche (34) comprend une bride annulaire (38) s'étendant radialement vers l'extérieur, qui porte contre la bague intérieure (44) de manière à empêcher un mouvement axial en avant de la broche (34) par rapport au support (16) ; et
l'extrémité avant de la broche (34) est raccordée à un dispositif de retenue (40) qui porte contre la paroi avant (26) du support (16) de manière à empêcher un mouvement axial en arrière de la broche (34) par rapport au support (16).

5. Train d'engrenage (10) selon l'une quelconque des revendications précédentes, dans lequel le matériau céramique est du nitrure de silicium.

6. Train d'engrenage (10) selon l'une quelconque des revendications précédentes, dans lequel les galets (52) ont une forme en cylindre avec une couronne centrale (53) de diamètre maximal et des parties d'extrémité (55) qui s'amincissent en partant de la couronne centrale (53) vers un diamètre plus petit.

7. Train d'engrenage (10) selon l'une quelconque des revendications précédentes, dans lequel la structure de plaque centrale (58) est disposée approximativement à mi-chemin entre les parois avant et arrière (26, 28) dans une direction axiale.

8. Train d'engrenage (10) selon l'une quelconque des revendications précédentes, dans lequel le support (16) comprend une paroi latérale (54) interconnectant les parois avant et arrière (26, 28) .

9. Train d'engrenage (10) selon la revendication 8, dans lequel une pluralité de parois latérales (54) sont aménagées dans un réseau de paires espacées autour de l'axe central de manière à définir une pluralité de lobes du support (16).

10. Train d'engrenage (10) selon la revendication 9, dans lequel une pluralité d'espaces sont définis entre les lobes du support (16) et la structure de plaque centrale comprend une pluralité de plaques centrales (58), chaque plaque centrale individuelle étant disposée dans l'un des espaces et s'étendant entre certaines adjacentes des parois latérales (54).

11. Moteur à turbine à gaz (100), comprenant :
un coeur de turbomachine (112, 114, 116) qui est à même de produire un flux de gaz de combustion ;
une turbine basse pression (108) disposée en communication d'écoulement de fluide aval avec le coeur (112, 114, 116) de la turbomachine ;
une soufflante de turbomachine rotative (104) ; et
un train d'engrenage épicyclique (10) couplé entre la soufflante (104) et la turbine basse pression (108), le train d'engrenage épicyclique (10) étant tel que décrit dans l'une quelconque des revendications 1 à 10.

12. Moteur à turbine à gaz (100) selon la revendication 11, dans lequel la soufflante (104) a un rapport de pression d'environ 1,25 ou plus.
